# FASCICULE DE BREVET EUROPEEN

(11) **EP 0 859 922 B1**
(45) Date de publication et mention de la délivrance du brevet: **06.11.2002**
(21) Numéro de dépôt: 97929346.1
(22) Date de dépôt: 13.06.1997
(51) Int. Cl.: F16H 61/18, F16H 61/24

(54) **DISPOSITIF DE SECURITE POUR BOITE DE VITESSES MECANIQUE**
SICHERHEITSEINRICHTUNG FÜR MECHANISCHES SCHALTGETRIEBE
SAFETY DEVICE FOR A MECHANICAL GEARBOX

(30) Priorité: 14.06.1996 FR 9607408
(43) Date de publication de la demande: 26.08.1998
(73) Titulaire: Renault s.a.s., 92100 Boulogne Billancourt (FR)
(72) Inventeur: DUCROT, Lionel, F-78280 Guyancourt (FR)
(86) Numéro de dépôt international: FR9701068
(87) Numéro de publication internationale: WO97047903

(56) Documents cités:
- EP-A- 0 139 261
- GB-A- 2 042 104
- GB-A- 2 161 555
- US-A- 3 866 488
- US-A- 3 937 100

## Description

La présente invention concerne la commande des boîtes de vitesses mécaniques. Plus précisément, elle a pour objet un dispositif de sécurité pour boîte de vitesses mécanique du type comportant un axe de commande interne déplacé à partir du levier de changement de vitesses en translation pour sélectionner une ligne de passage de vitesses et en rotation pour passer une vitesse sur la ligne sélectionnée, un doigt de passage des vitesses solidaire de l'axe de commande interne, et un ensemble de crabots incluant au moins un crabot particulier de marche avant et un crabot de marche arrière adjacents déplacés respectivement de part et d'autre dudit axe d'alignement dans des directions opposées pour passer le rapport le plus élevé de marche avant et le rapport de marche arrière.

Dans une telle boîte de vitesses, le rapprochement des lignes de passage du rapport le plus élevé de marche avant et du rapport de marche arrière pose le problème de l'interdiction du passage de la marche arrière lors du retrait du rapport le plus élevé de marche avant.

Ce problème est particulièrement critique dans le cas des boîtes de vitesses équipées d'un synchroniseur de marche arrière qui permet de passer la marche arrière lorsque le véhicule se déplace en marche avant.

La publication EP 0139 261 qui divulgue un dispositif conforme au préambule de la revendication 1 propose à ce sujet d'introduire des niveaux d'efforts différents dans la course de déplacement en sélection du levier de changement de vitesses grâce à l'adaptation d'un ensemble de ressorts qui agissent sur le doigt de commande, soit en poussant directement sur celui-ci, soit par l'intermédiaire d'une rampe à billes, de sorte que le conducteur bénéficie d'un "guidage sensitif", lors de la sélection d'une ligne de vitesses.

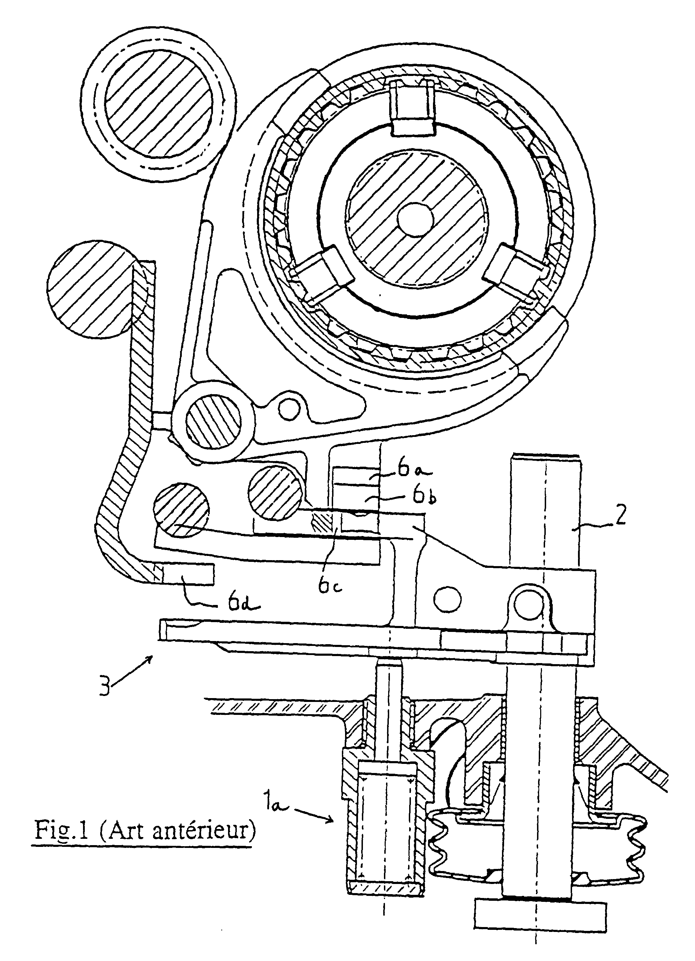

La figure 1 de la présente demande montre un dispositif de sécurité de type connu comportant un pressoir à ressort également conforme au préambule de la revendication 1.

On connaît par ailleurs des systèmes de sécurité, visant à interdire complètement les passages involontaires en marche arrière, notamment des systèmes à gâchette, implantés sur la poignée du levier de changement de vitesses, qui doivent être déverrouillés par le conducteur pour pouvoir passer en marche arrière. Habituellement, le verrou proprement dit est alors monté au niveau de l'articulation du levier de vitesses sur le plancher du véhicule. Son bon fonctionnement suppose un réglage précis lors du montage de la commande. Si en revanche, le verrou est situé à l'intérieur de la boîte de vitesses, son actionnement nécessite l'implantation d'un câble ou d'une tringle de commande, dont le réglage est également très délicat.

Il existe également des systèmes d'interdiction du passage direct en marche arrière à partir d'un rapport de marche avant, qui sont intégrés au mécanisme de commande interne de la boîte.

La publication GB-2402104 décrit à ce sujet un mécanisme de verrouillage de la marche arrière associé aux éléments de liaison entre l'extrémité inférieure du levier de changement de vitesses, et un axe de commande interne de la boîte.

Enfin, par la publication GB-2161555, on connaît un autre mécanisme de verrouillage interne de marche arrière, selon lequel un axe coulissant vient bloquer un bras de commande interne actionné par le levier de vitesses.

La présente invention vise à empêcher tout passage involontaire en marche arrière dans une boîte de vitesses mécanique du type précisé ci-dessus.

Elle concerne un dispositif de sécurité pour boîte de vitesses mécanique qui comporte un corps creux immobilisé vis-à-vis du carter renfermant un piston creux repoussé élastiquement contre le doigt de passage par un premier ressort, le piston creux renfermant une tige mobile repoussée en direction du doigt de passage par un deuxième ressort, de façon à pénétrer dans un évidemment correspondant du doigt de passage, lors du passage du rapport le plus élevé de marche avant, faisant passer le dispositif dans une position d'armement en empêchant le retrait du piston creux à l'intérieur du corps creux de façon à interdire l'engagement du doigt de passage dans le crabot de marche arrière lors du retour du crabot particulier de marche avant dans l'alignement des autres crabots de marche avant.

Ces moyens de guidage, de structure particulièrement simple, sont totalement fiables, faciles à monter dans la boîte et ne nécessitent aucun réglage ultérieur.

Ils constituent par ailleurs une unité de commande compacte, fixée à l'intérieur du carter de la boîte.

De préférence, cette unité se présente sous la forme d'une cartouche vissée dans la masse du carter.

L'unité en question assure également l'introduction d'un guidage sensitif dans la manoeuvre en sélection du levier de changement de vitesses.

Le guidage sensitif est obtenu grâce à la coopération d'un piston creux repoussé successivement contre le doigt de passage par un premier ressort définissant le niveau d'effort à appliquer au levier de changement de vitesses jusqu'à la ligne de passage du rapport le plus élevé de marche avant et par un second ressort définissant avec le premier ressort l'effort résistant du levier au-delà de cette ligne de passage.

D'autres caractéristiques et avantages de l'invention apparaîtront clairement à la lecture de la description suivante d'un mode de réalisation particulier de celle-ci, en liaison avec les dessins annexés sur lesquels:
- les figures 1, 2, 3, 4 et 5 se rapportent à l'art antérieur,
- la figure 6 représente le dispositif de commande de l'invention,
- la figure 7 met en évidence l'adaptation du doigt de commande de marche avant, rendue nécessaire par l'invention, et
- les figures 8A à 12C illustrent le fonctionnement de ce dispositif.

La figure 1 représente en coupe un mécanisme de boîte de vitesses de type connu, comportant notamment un axe de commande interne 2 déplacé à partir du levier de changement de vitesses en translation pour sélectionner une ligne de passage de vitesses et en rotation pour passer une vitesse sur la ligne sélectionnée. Sur cet axe 2, est fixé un doigt de passage double 3, coopérant avec trois crabots de marche avant 6a, 6b, 6c, et un crabot de marche arrière 6d.

Cette figure fait également apparaître un système de poussoir la de type connu, renfermant un ensemble de ressorts (non représentés) qui exercent un effort résistant à la manoeuvre du levier de changement de vitesses sur la ligne de point mort, en repoussant élastiquement le doigt de passage 3 vers le haut.

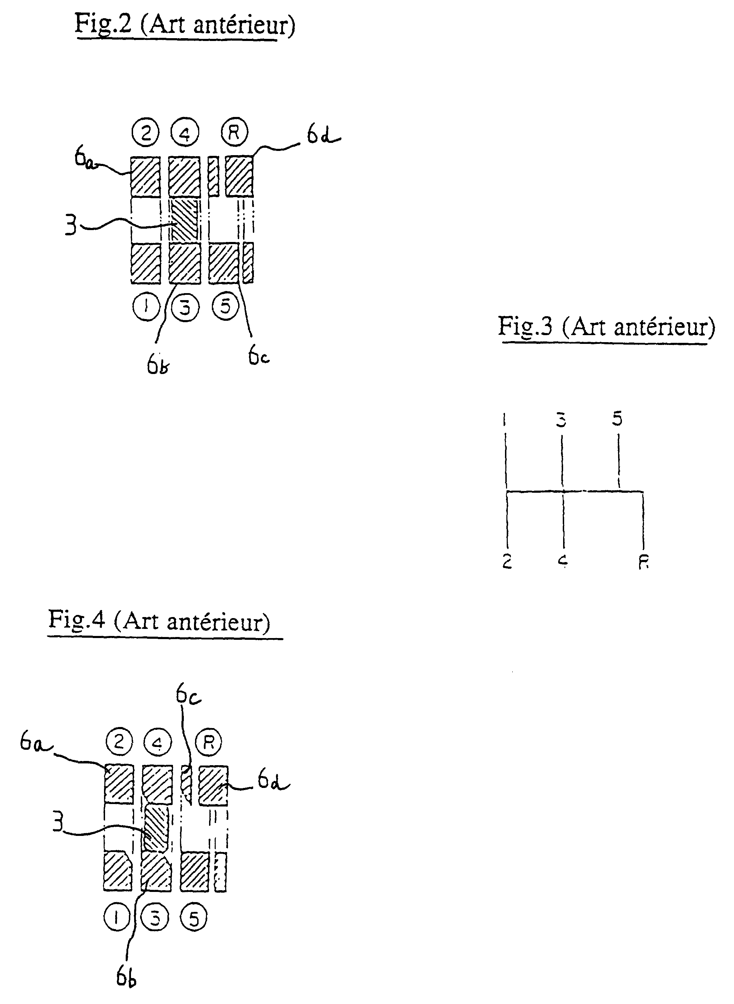

Les figures 2 et 4, se rapportant également à l'art antérieur, illustrent une disposition particulière des crabots 6a, à 6d, regroupés pour être actionnés par un doigt de passage simple en marche avant et en marche arrière. Cette disposition inclut deux crabots symétriques 6a, 6b, responsables du passage des quatre premiers rapports de marche avant, et deux crabots adjacents de forme particulière se chevauchant mutuellement, de façon à obtenir au levier une grille de sélection et de passage de type connu illustrée par la figure 3, selon laquelle, la marche arrière est légèrement décalée vers l'extérieur par rapport à la ligne de cinquième. En raison de la proximité de ces deux lignes de passage sur la grille, le problème de l'interdiction du passage en marche arrière lors du retrait de la cinquième évoqué ci-dessus, est donc particulièrement critique aussi bien avec l'agencement de crabots des figures 2 et 4 correspondant à un doigt de passage simple, qu'avec celui de la figure 1, actionné suivant la même grille de sélection et de passage, illustrée par la figure 3.

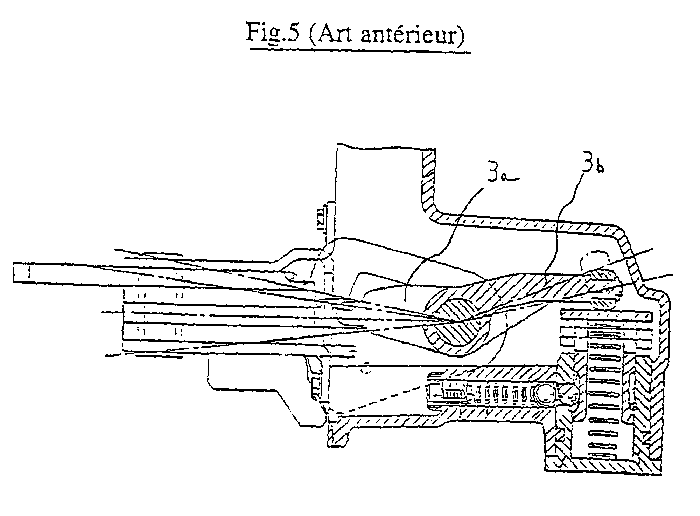

La figure 5 reproduit un système de commande interne de boîte de vitesses de type connu par la publication EP 139 261, compatible avec la grille de sélection et de passage de la figure 3, selon lequel le doigt de passage des vitesses 3a est solidaire d'un bras 3b coopérant avec un ensemble de billes et de ressorts en vue d'introduire un guidage sensitif dans la commande des vitesses. En revanche, ce système ne prévoit aucune mesure de sécurité pour interdire directement les passages involontaires en marche arrière.

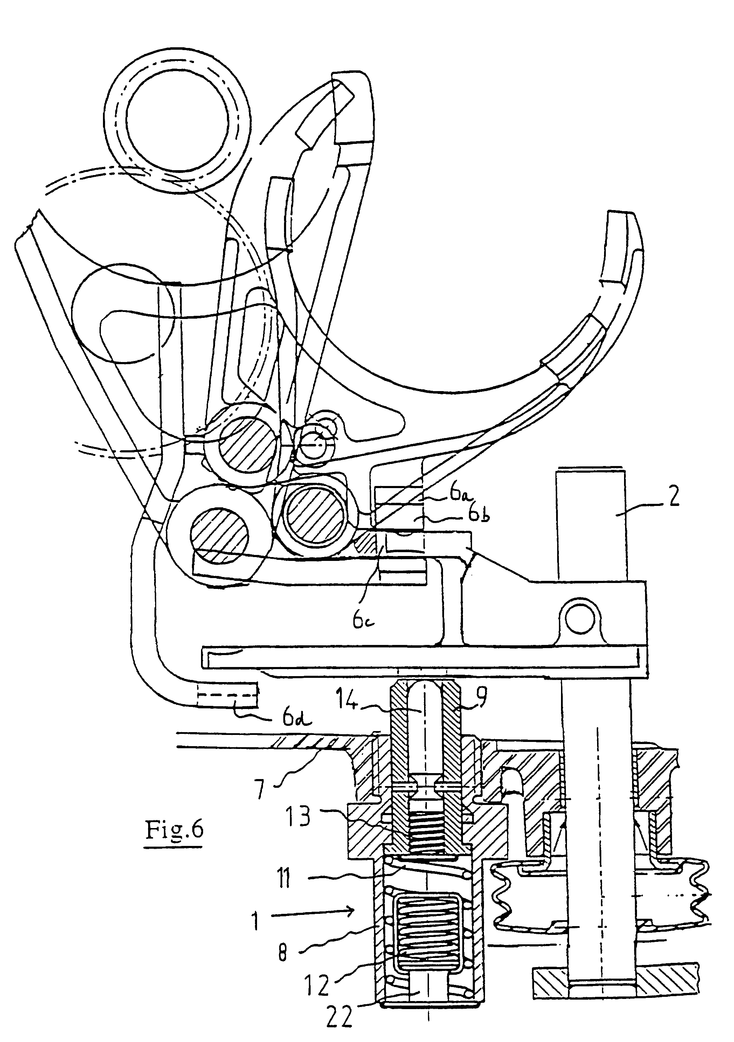

Le dispositif de sécurité 1 conforme à l'invention faisant l'objet de la figure 6, est monté selon dans le carter 7 de la boîte de vitesses, selon une disposition analogue à celle du système de poussoir de la figure 1, mais il est bien entendu possible de prévoir d'autres implantations pour ce dispositif, sans sortir du cadre de l'invention.

Ce dispositif, constitue une unité compacte rapportée sur le carter 7, qui se présente sous la forme d'une cartouche 1, et peut par exemple être vissée dans la masse du carter 7 d'une boîte de vitesses. Comme indiqué ci-dessus, il est conçu pour une boîte de vitesses manoeuvrée à partir d'une grille de sélection et de passage correspondant à la figure 3. plus précisément, il trouve son application dans une boîte de vitesses comportant un axe de commande interne 2 déplacé à partir du levier de changement de vitesses en translation pour sélectionner une ligne de passage de vitesses et en rotation pour passer une vitesse sur la ligne sélectionnée, un doigt de marche passage de vitesses 3 solidaire de l'axe de commande interne 2, un ensemble de crabots 6a, 6b, 6c, 6d incluant au moins un crabot particulier de marche avant 6c et un crabot de marche arrière 6d adjacents déplacés respectivement de part et d'autre de leur ligne de point mort dans des directions opposées pour passer le cinquième rapport de marche avant et la marche arrière.

Comme celle de la figure 1, la boîte de vitesses illustrée par la figure 6 présente un doigt de passage de vitesses double, mais le dispositif proposé s'applique également à un mécanisme de commande interne à doigt simple, tel que celui des figures 2 et 4.

Ce dispositif, illustré par les figures 6, 8A, 9A, 10A, 11A et 12A, comporte un corps creux 8 immobilisé vis à vis du carter 7. Le corps 8 renferme un piston creux 9 repoussé élastiquement contre le doigt de passage avant 3 par un premier ressort 11. Conformément à l'invention, le premier ressort 11 définit un premier niveau d'effort à appliquer au levier de changement de vitesses jusqu'à la ligne de passage de cinquième, tandis qu'un troisième ressort 12 définit avec le premier ressort 11 l'effort résistant du levier de changement de vitesses entre la ligne de cinquième et à la ligne de marche arrière.

Comme indiqué ci-dessus, ce dispositif exerce une fonction de sécurité visant à interdire le passage involontaire de la marche arrière en quittant la cinquième. A cet effet, le piston creux 9 renferme une tige mobile 14 repoussée en direction du doigt de marche avant 3 par un deuxième ressort 13, de façon à pénétrer dans un évidement correspondant 4 du doigt de passage 3, lors du passage en cinquième.

Par ailleurs, le corps creux 9 renferme des ergots mobiles 16. Ces derniers coopèrent avec la tige 14 lors du passage en cinquième pour se déplacer entre une position de désarmement où ils sont repoussés à l'intérieur d'une gorge annulaire 18 de celle-ci, afin de ne pas limiter le déplacement du piston creux et du doigt de passage 3 en direction des lignes de cinquième et de marche arrière, et une position d'armement où ils prennent appui au fond d'une gorge intérieure 19 du piston creux 9 afin d'interdire le déplacement du piston creux 9 et du doigt de marche avant 3 jusqu'à la ligne de marche arrière.

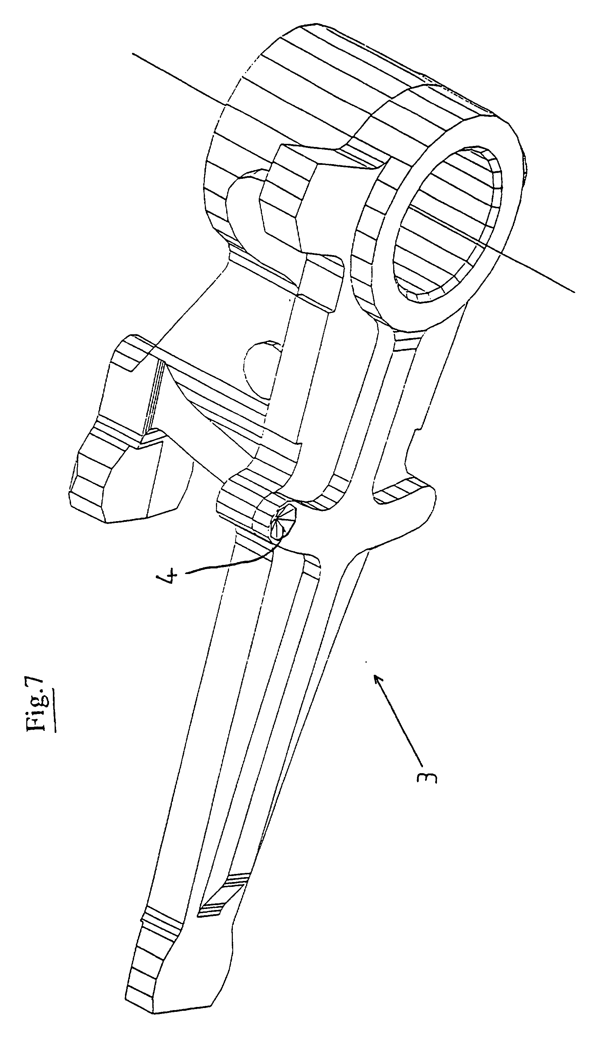

La figure 7, relative à un doigt de passage de vitesses 3 compatible avec le dispositif de sécurité 1 proposé par l'invention, met en évidence l'évidement 4 du doigt 3, recevant l'extrémité de la tige mobile 14, lors de l'armement du dispositif 1.

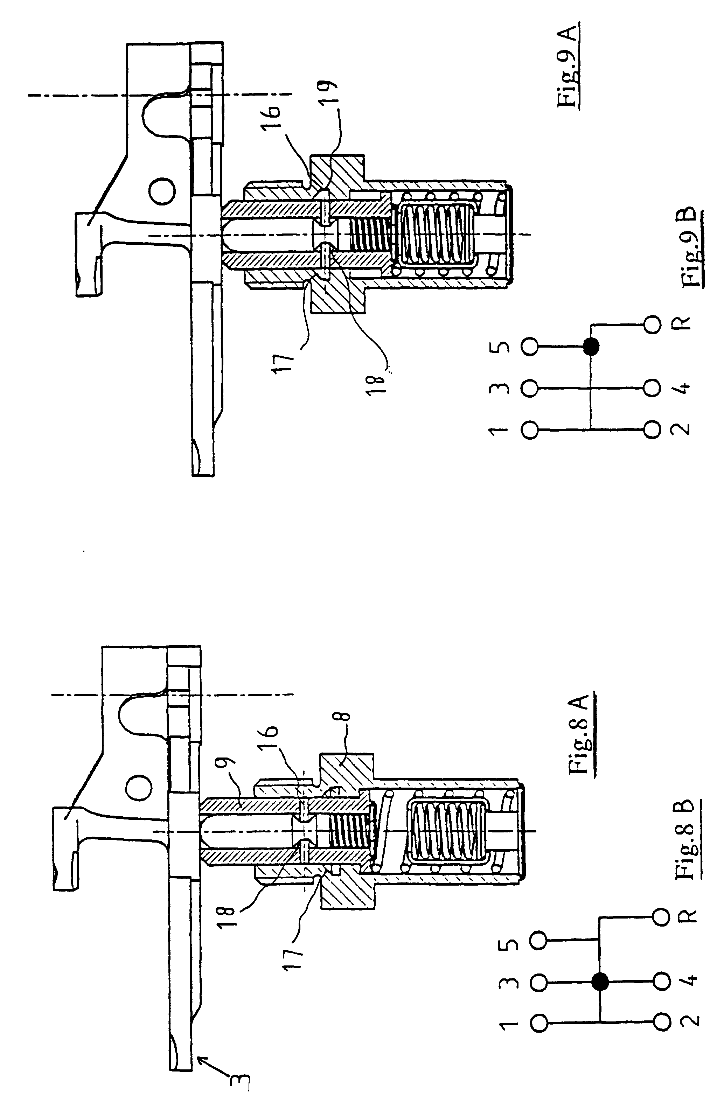

La figure 8A montre la situation du dispositif 1, lorsque le levier de changement de vitesses est au point mort (cf figure 8B), c'est-à-dire sur la ligne de passage du troisième et du quatrième rapport de marche avant. Dans cette situation, le piston creux 8 et la tige mobile 14 sont en appui contre le doigt 3, tandis que les ergots 16 sont engagés dans la gorge annulaire 18 de la tige 14, et non dans la gorge intérieure 19 du corps creux 8. Le dispositif n'est pas armé.

Pour atteindre la ligne de cinquième (cf figures 9A et 9B), le doigt 3 repousse simultanément le piston creux 8 et la tige 14 à l'intérieur du corps creux 8, à l'encontre du premier ressort 11.

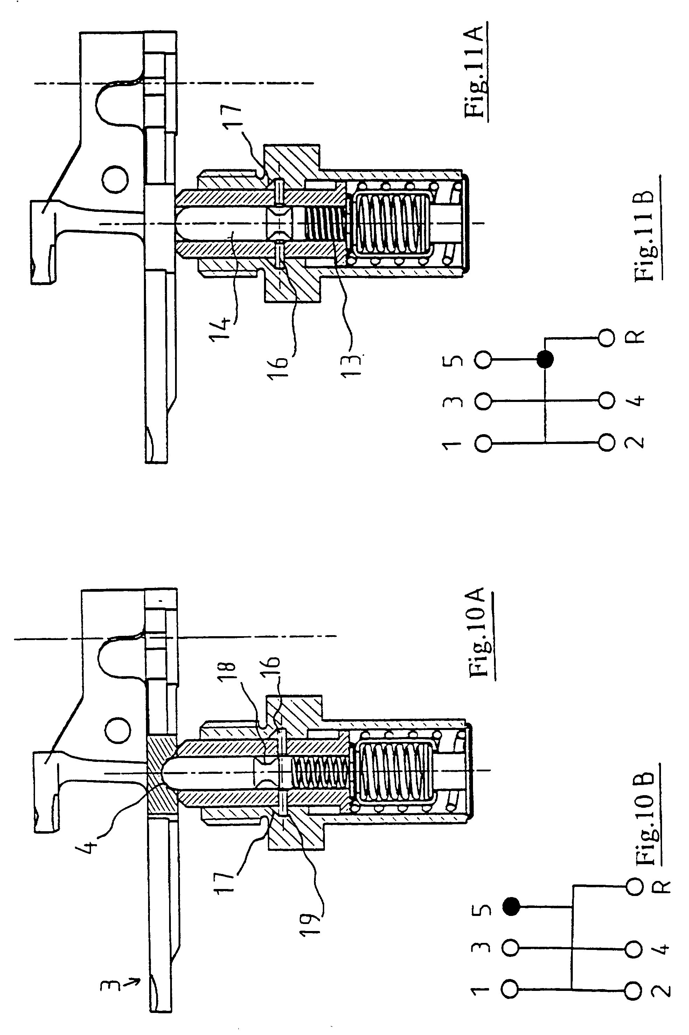

Pour engager la cinquième (cf figures 10A et 10B), le doigt 3 a pivoté avec l'axe de commande 2, de façon à placer son évidement 4 en regard de la tige 14. Etant donné que la tige 14 et le piston creux 9 ne sont pas liés, la tige 14 peut s'échapper partiellement à l'extérieur du piston creux 9. Simultanément, les ergots 16 sont repoussés par la tige 14 au fond des gorges intérieures 19 du piston creux 9, dans une position où ils interdisent le déplacement du piston creux 9 vers l'intérieur du corps creux 8. Le dispositif de sécurité est alors armé. Le retour du levier de changement de vitesses vers la ligne de point mort à partir de la cinquième, correspondant à une rotation inverse du doigt 3, et à l'expulsion de la tige 14 hors de l'évidement 4, entraîne le retrait de celle-ci à l'intérieur du piston creux 9 en comprimant le deuxième ressort 13, tandis que les ergots 16 restent en position d'armement (cf figure 11A et 11B).

En revanche, le déplacement du levier de changement de vitesse sur la ligne de point mort en direction des rapports inférieurs de marche avant, autorisant le déplacement du piston creux 9 vers l'extérieur, permet le retrait des ergots 16 en position de désarmement, sous la poussée transversale des rampes intérieures 17 du piston creux 9.

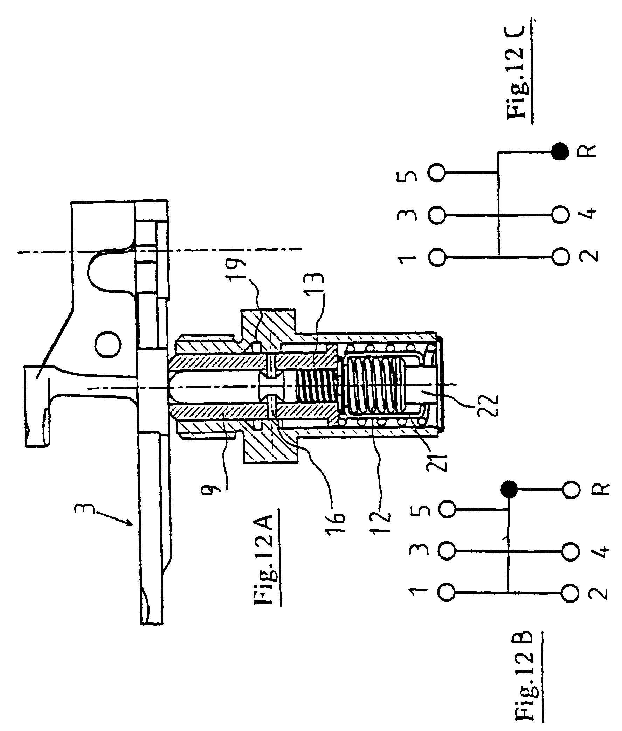

Le dispositif de sécurité est alors désarmé, et la marche arrière peut être sélectionnée (cf figure 12B), puis engagée (cf figure 12C). Ces deux situations sont illustrées par la même figure 12A, étant donné que le déplacement du levier de changement de vitesses sur la ligne de marche arrière se traduit par une simple rotation du doigt 3, sans incidence sur le dispositif 1. Lors de la sélection de la marche arrière, le conducteur déplace son levier et le doigt 3 sur la ligne de sélection au delà de la ligne de cinquième, le dispositif étant désarmé. A partir de celle-ci, il rencontre une résistance plus élevée en raison de la compression du deuxième ressort 13. Il bénéficie donc d'un guidage sensitif le long de la ligne de sélection lui indiquant qu'il a dépassé la ligne de cinquième.

Conformément aux figures, le troisième ressort 12 peut être disposé à l'intérieur d'une douille 21 coulissant axialement dans le corps creux 8 autour d'un axe 22 fixe, sous la poussée du piston creux 9.

En conclusion, il faut souligner que la compression du premier ressort indique au conducteur qu'il dépasse la ligne de passage de troisième et de quatrième sur la ligne de sélection, tandis que la compression successive du premier et du troisième ressort, définissant un niveau d'effort supérieur, lui indique qu'il est en train de sélectionner la marche arrière. Par ailleurs, les ergots mobiles du dispositif ont une longueur telle qu'une de leurs extrémités atteint le fond de la gorge intérieure du corps creux, lorsque l'autre est en appui sur la paroi cylindrique de la tige mobile. Dans cette situation, le dispositif de sécurité est stable et son montage dans le carter s'intègre sans difficulté dans l'ensemble des opérations d'assemblage de la boîte de vitesses.

## Revendications

1. Dispositif de sécurité pour boîte de vitesses mécanique comportant un axe de commande interne (2) déplacé à partir du levier de changement de vitesses en translation pour sélectionner une ligne de passage de vitesses et en rotation pour passer une vitesse sur la ligne sélectionnée, un doigt de passage des vitesses (3) solidaire de l'axe de commande interne (2), un ensemble de crabots (6a, 6b, 6c, 6d) incluant au moins un crabot particulier de marche avant (6c) et un crabot de marche arrière (6d) adjacents déplacés respectivement de part et d'autre de leur ligne de point mort dans des directions opposées pour passer le rapport le plus élevé de marche avant et le rapport de marche arrière, le dispositif comportant un corps creux (8) immobilisé vis-à-vis du carter (7) et renfermant un piston creux (9) repoussé élastiquement contre le doigt de passage (3) par un premier ressort (11), **caractérisé en ce que** le piston creux renferme une tige mobile (14) repoussée en direction du doigt de passage (3) par un deuxième ressort (13), de façon à pénétrer dans un évidemment correspondant (4) du doigt de passage (3), lors du passage de rapport le plus élevé de marche avant, faisant passer le dispositif dans une position d'armement en empêchant le retrait du piston creux (9) à l'intérieur du corps creux (8) de façon à interdire l'engagement du doigt de passage (3) dans le crabot de marche arrière (6d) lors du retour du crabot particulier de marche avant (6c) dans l'alignement des autres crabots de marche avant (6a, 6b).

2. Dispositif de sécurité selon la revendication 1, **caractérisé en ce qu'**il constitue une unité de commande compacte (1), rapportée à l'intérieur du carter (7) de la boîte.

3. Dispositif de sécurité selon la revendication 1 ou 2, **caractérisé en ce qu'**il se présente sous la forme d'une cartouche (1) vissée dans la masse du carter (7).

4. Dispositif de sécurité selon la revendication 1, 2 ou 3, **caractérisé en ce que** le corps creux (9) renferme des ergots mobiles (16) coopérant avec la tige (14) lors du passage sur le rapport le plus élevé de marche avant pour passer dans une position d'armement et que les ergots (16) sont repoussés par la tige (14) à l'intérieur d'une gorge intérieure (19) du corps creux en position d'armement.

5. Dispositif de sécurité selon la revendication 4, **caractérisé en ce que** le retour du levier de changement de vitesses vers la ligne de point mort à partir du rapport le plus élevé de marche avant entraîne le retrait de la tige mobile (14) à l'intérieur du piston creux (9) en comprimant le deuxième ressort (13), tandis que les ergots (16) restent en position d'armement.

6. Dispositif de sécurité selon l'une des revendications 4 ou 5, **caractérisé en ce que** le déplacement du levier de changement de vitesses sur la ligne de point mort en direction des rapports inférieurs de marche avant entraîne le retrait des ergots (16) en position de désarmement, sous la poussée transversale des rampes intérieures (17) du piston creux (9).

7. Dispositif de sécurité selon l'une des revendications précédentes, **caractérisé en ce qu'**un troisième ressort (12) est disposé à l'intérieur d'une douille (21) coulissant axialement dans le corps creux (8) autour d'un axe (22) fixe sous la poussée du piston creux (9) entre la ligne de passage du rapport le plus élevé de marche avant, et la ligne de passage de la marche arrière.

## Patentansprüche

1. Sicherheitsanordnung für mechanische Getriebe, mit einer inneren Schaltwelle (2), die durch den Gangschalthebel quer verschoben wird um eine Schaltgasse anzuwählen und verdreht wird um einen Gang in der angewählten Schaltgasse einzulegen, mit einem Schaltfinger (3), der fest mit der inneren Schaltwelle (2) verbunden ist, mit einer Anzahl von Klauen (6a,6b,6c,6d) einschliesslich einer besonderen Klaue (6c) für die Vorwärtsfahrt und einer Klaue (6d) für die Rückwärtsfahrt, die in der Nähe und zu beiden Seiten zu ihrer Gasse mit der Neutralstellung in entgegengesetzte Richtungen verschiebbar angeordnet sind zum Einlegen des höchsten Ganges für die Vorwärtsfahrt und des Ganges für die Rückwärtsfahrt und mit einem Hohlteil (8), das bezüglich des Gehäuses (9) feststeht und in das ein Hohlkolben (9) eingesetzt ist, der in Richtung Schaltfinger (3) durch eine erste Feder (11) elastisch beaufschlagt wird, **dadurch gekennzeichnet, dass** in den Hohlkolben eine bewegliche Stange (14) eingesetzt ist, die durch eine zweite Feder (13) in Richtung Schaltfinger (3) derart beaufschlagt wird, dass sie in eine angepasste Aussparung (4) des Schaltfingers (3) eingreift während des Einlegens des höchsten Ganges für die Vorwärtsfahrt und die Anordnung in eine Verriegelungsstellung überführt wird indem einein Zurückziehen des Hohlkolbens (9) in das Innere des Hohlteils (8) verhindert wird, sodass ein Eingriff des Schaltfingers (3) in die Klaue m(6d) für die Rückwärtsfahrt verhindert wird während der Rückkehr der besonderen Klaue (6c) für die Vorwärtsfahrt in die Reihe der anderen Klauen (6a,6b) für die Vorwärtsfahrt.

2. Sicherheitsanordnung nach Anspruch 1, **dadurch gekennzeichnet, dass** sie eine kompakte Steuereinheit (1) bildet, die in das Innere des Gehäuses (7) des Getriebes eingesetzt ist.

3. Sicherheitsanordnung nach Anspruch 1 oder 2, **dadurch gekennzeichnet, dass** sie die Form einer Patrone (1) aufweist, die in die Wand des Gehäuses (7) eingeschraubt ist.

4. Sicherheitsanordnung nach Anspruch 1, 2 oder 3, **dadurch gekennzeichnet, dass** im Hohlteil (9) bewegliche Vorsprünge (16) angeordnet sind, die mit der Stange (14) zusammenwirken während des Einlegens des höchsten Ganges für die Vorwärtsfahrt um so die Verriegelungsstellung einzunehmen und dass die Vorsprünge (16) durch die Stange (14) in Richtung des Inneren einer Innennut (19) des Hohlteils zur Einnahme der Verriegelungsstellung beaufschlagt werden.

5. Sicherheitsanordnung nach Anspruch 4, **dadurch gekennzeichnet, dass** die Rückkehr des Gangschalthebels in die Schaltgasse mit der Neutralstellung von dem höchsten Gang für die Vorwärtsfahrt ein Zurückziehen der beweglichen Stange (14) in das Innere des Hohlkolbens (9) bewirkt unter Zusammendrücken der zweiten Feder (13), während die Vorsprünge (16) in der Verriegelungsstellung verbleiben.

6. Sicherheitsanordnung nach einem der Ansprüche 4 oder 5, **dadurch gekennzeichnet, dass** die Verschiebung des Gangschalthebels entlang der Schaltgasse mit der Neutralstellung in Richtung niedrigerer Gänge für die Vorwärtsfahrt ein Zurückziehen der Vorsprünge (16) in die entriegelte Stellung bewirkt unter der Druckeinwirkung in Querrichtung innerer Rampen (17) des Hohlkolbens (9).

7. Sicherheitsanordnung nach einem der vorhergehenden Ansprüche, **dadurch gekennzeichnet, dass** eine dritte Feder (12) im Inneren einer Hülse (21) angeordnet ist, die im Hohlteil (8) um eine feststehende Achse (22) axial gleitend angeordnet ist unter der Druckeinwirkung des Hohlkolbens (9) zwischen der Schaltgasse für das Einlegen des höchsten Ganges für die Vorwärtsfahrt und der Schaltgasse für das Einlegen des Ganges für die Rückwärtsfahrt.

## Claims

1. Safety device for a mechanical gearbox comprising an internal control axle (2) displaced by the gear selection lever in translation in order to select a line for changing gear, and in rotation in order to change gear along the line selected, a gear change finger (3) integral with the internal control axle (2), an assembly of dog clutches (6a, 6b, 6c, 6d) including adjacently at least one dog clutch particular to forward gears (6c) and a dog clutch for reverse gears (6d) displaced respectively on either side of the neutral line in opposite directions in order to select the highest forward gear and the reverse gear, the device comprising a hollow body (8) fixed with respect to the casing (7) enclosing a hollow piston (9) pushed back elastically against the gear change finger (3) by a first spring (11), **characterised in that** the hollow piston surrounds a moveable rod (14) pushed back in the direction of the gear change finger (3) by a second spring (13) such as to penetrate into a corresponding indentation (4) in the gear change finger (3) during changing to the highest forward gear, making the device pass into an active position, preventing the withdrawal of the hollow piston (9) into the interior of the hollow body (8) such as to prevent engagement of the gear change finger (3) in the dog clutch (6d) for reverse gear when the dog clutch particular to forward gears (6c) returns into alignment with the other forward dog clutches (6a, 6b).

2. Safety device according to claim 1, **characterised in that** it constitutes a compact control module (1) fixed to the interior of the casing (7) of the gearbox.

3. Safety device according to claim 1 or 2, **characterised in that** it is in the form of a cartridge (1) screwed into the mass of the casing (7).

4. Safety device according to claim 1, 2 or 3, **characterised in that** the hollow body (9) encloses moveable pins (16) cooperating with the rod (14) when the highest forward gear is selected, in order to pass into an active position, and that the pins (16) are pushed back by the rod (14) into the interior of an internal throat (19) of the hollow body in an active position.

5. Safety device according to claim 4, **characterised in that** the return of the gear selection lever towards the neutral line from the highest forward gear causes the withdrawal of the moveable rod (14) into the interior of the hollow piston (9), compressing the second spring (13), while the pins (16) remain in an active position.

6. Safety device according to one of claims 4 or 5, **characterised in that** the displacement of the gear selection lever on the neutral line in the direction of the low forward gears causes the withdrawal of the pins (16) to an inactive position under the transverse thrust of the interior gradients (17) of the hollow piston (9).

7. Safety device according to one of the preceding claims, **characterised in that** a third spring (12) is arranged in the interior of a sleeve (21) travelling axially in the hollow body (8) about an axle (22) fixed by the thrust of the hollow piston (9) between the line for selection of the highest forward gear and the line for selection of reverse gear.
